# FASCICULE DE BREVET EUROPEEN

(11) **EP 0 486 744 B1**
(45) Date de publication et mention de la délivrance du brevet: **08.06.1994**
(21) Numéro de dépôt: 90830547.7
(22) Date de dépôt: 21.11.1990
(51) Int. Cl.: H02G 7/00

(54) **Ballon de signalisation pour câbles aériens**
Warnkugel für Freileitungskabel
Marking ball for aerial cables

(43) Date de publication de la demande: 27.05.1992
(73) Titulaire: COMEL SRL, Nichelino To (IT)
(72) Inventeur: Zanellato, Alfredo, Dott. Ing., I-10133 Torino (IT)

(56) Documents cités:
- CH-A- 579 838
- FR-A- 2 569 312

## Description

La présente invention se rapporte aux ballons de signalisation utilisés pour avertir de la présence de câbles aériens.

Comme on sait, les susdits ballons de signalisation sont utilisés pour indiquer à tout aréronef, la présence de câbles aériens pour les lignes de haute tension, de câbles suspendus pour les téléphériques ou toute installation analogue représentant un danger évident pour les aéronefs surtout quand ces installations sont suspendues à une hauteur considérable, par exemple entre les arêtes surplombant les vallées ou sur le sommet de reliefs montagneux.

La présente invention a pour objet en particulier les moyens qui permettent de bloquer les susdits ballons de signalisation sur les câbles porteurs et dont le positionnement stable est indispensable au cas où les câbles suivraient une trajectoire inclinée; cela est en tout cas nécessaire afin de faire obstacle aux effets déterminés par les rafales de vent qui causent leur déplacement en compromettant ainsi ses fonctions de signalisation. Traditionnellement, les susdits ballons de signalisation sont constitués de deux coques hémisphériques en matière plastique ou métallique d'une couleur particulièrement évidente et/ou avec des surfaces réfléchissantes.

Sur ces demi-sphères, des moyens d'accrochage au câble sont prévus, normalement constitués de deux paires de brides ou gâches en vis-à-vis, chacune dotée d'une cavité ou logement pour le câble et opposées entre elles axialement, qui se ferment en serrant sur le câble qui traverse le ballon de signalisation, au moyen de vis ou fermetures rapides par encliquetage ou d'un autre genre. De telles balises sont décrites dans FR-A-2569312 et CH-A-579838.

Les ballons de signalisation connus techniquement, décrits précédemment présentent quelques inconvénients.

Tout d'abord, le système de blocage sur les câbles qui, dans la plupart des cas est exposé à de nombreuses sollicitations, est de telle sorte qu'il ne peut récupérer les jeux qui se créent avec le temps entre le câble et son logement, entraînant un glissement du ballon sur le câble. Même au cas où l'on prévoirait d'ajouter une garniture en élastomère entre le logement et le câble, l'inconvénient susmentionné se représenterait même si c'est de manière plus atténuée car la garniture avec le temps, pourrait perdre en partie ses qualités élastomères.

Ensuite, les ballons de signalisation connus techniquement, présentent un autre inconvénient qui consiste dans le fait d'obliger la personne chargée de l'installation à effectuer manuellement le montage sur câble, ce qui présente de sérieuses difficultés dans certaines conditions extrêmes comme en haute montagne ou à une hauteur du sol considérable.

L'objectif de la présente invention est de réaliser un ballon de signalisation pour câbles aériens ne présentant aucun des inconvénients cités ci-dessus. On parvient à un tel résultat en réalisant un ballon de signalisation pour câbles aériens constitué de deux coques hémisphériques en matière plastique ou métallique, caractérisé par le fait qu'il comprend des moyens de blocage sur le câble fixés en opposition axiale sur les susdites demi-coques, chacun constitué de deux parties en vis-à-vis et spéculaires dans chacune desquelles on a prévu:
- une dent et opposée de manière barycentrique, une cavité respectivement en mesure de s'engager dans la cavité et de recevoir la dent, l'une et l'autre présentes dans la partie opposée de manière spéculaire;
- un logement créé entre la susdite dent et cavité en direction transversale dans laquelle au moins un plan résulte incliné vers ledit ballon de signalisation et dans lequel on obtient une glissière pour
- un patin introduit de manière à coulisser dans ledit logement et portant une garniture en élastomère qui se ferme en serrant sur le câble au moment de la jonction des susdites parties constituant les moyens de blocage.

Grâce à ces caractéristiques, on réalise un ballon de signalisation constitué de l'union de deux coques hémisphériques effectuée grâce à l'assemblage des deux parties composant chacun des moyens de blocage sur le fil. Cet assemblage détermine un logement de forme tronconique à l'intérieur duquel on introduit deux patins coulissants portant les garnitures en élastomère qui, vu leur interférence avec le câble à l'intérieur du logement qui les abrite, sont en mesure de se fermer en serrant sur celui-ci, pouvant ainsi positionner de manière stable le ballon de signalisation par rapport au susdit câble porteur qui le traverse.

Il apparaît donc évident d'après tout ce qui précède que la forme essentiellement tronconique donnée aux logements des patins avec garnitures, permet de récupérer automatiquement les jeux éventuels qui pourront se créer entre le câble porteur et les garnitures de serrage, grâce au déplacement progressif des susdits patins à l'intérieur du logement vers des sections d'un diamètre graduellement plus petit.

En outre, l'assemblage des deux parties qui composent lesdits moyens de blocage, réalisé grâce au travail des dents dans les cavités correspondantes, résulte être rapide et facile et peut être effectué en utilisant des moyens mécaniques ou pneumatiques ou d'un autre type, sans qu'il y ait pour cela une intervention directe de la part de la personne chargée de l'installation.

D'autres caractéristiques et avantages de la présente invention se révèleronts évidents au cours de la description détaillée qui suit, fournie à titre d'exemple non limitatif et se référant aux dessins annexés dans lesquels:
- la fig. 1: est la vue en perspective et d'ensemble de l'invention dont il est l'objet;
- la fig. 2: est la vue en perspective, agrandie et éclatée des moyens de blocage sur le câble portant le ballon de signalisation.

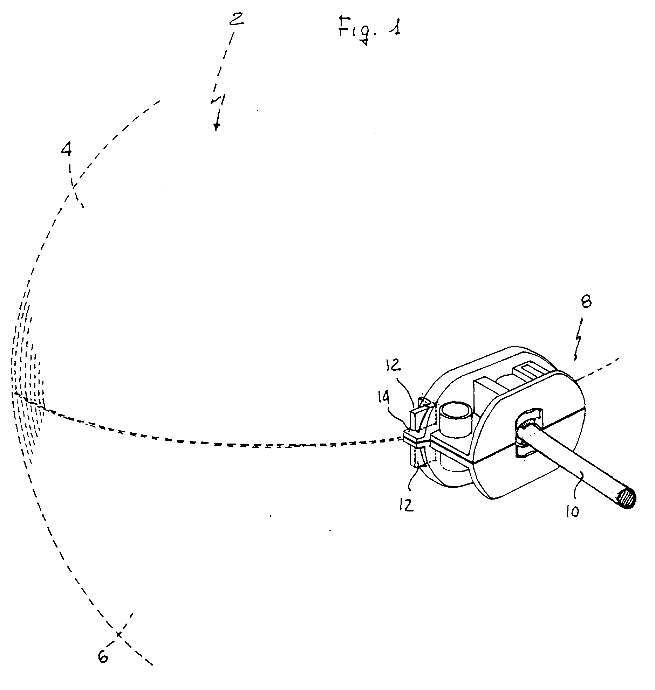

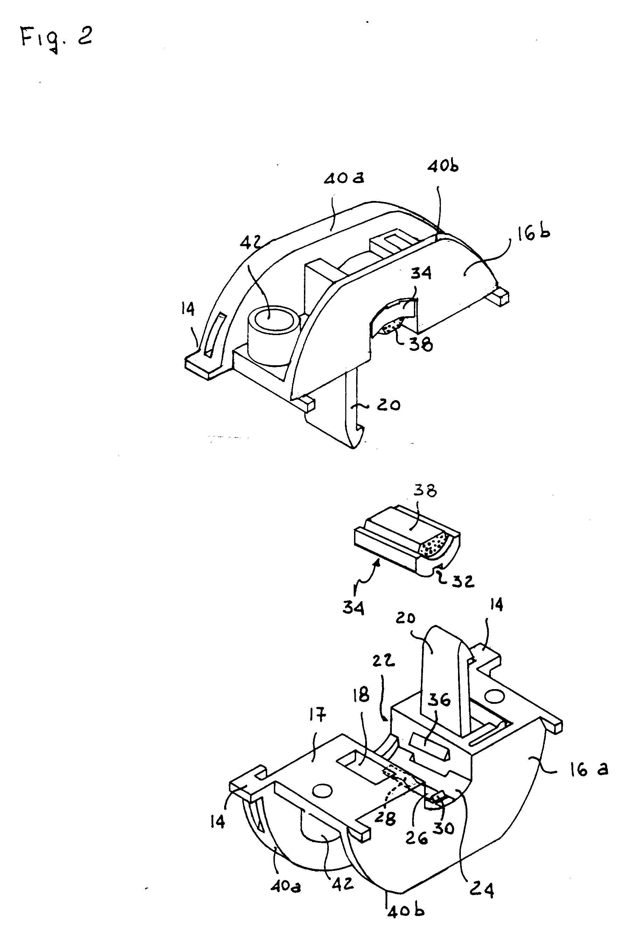

D'après ce qui est illustré dans la fig. 1, ledit ballon de signalisation, indiqué dans son ensemble par 2, est réalisé par deux coques hémisphériques 4 et 6 en matière plastique ou métallique obtenus par moulage. Les surfaces externes de ces coques peuvent être soit des surfaces réfléchissantes, soit rendues ainsi à l'aide d'applications de matériels réfléchissants. L'assemblage de ces coques hémisphériques s'effectue à l'aide de deux moyens de blocage 8 sur le câble 10 passant à travers le ballon de signalisation. Ces moyens de blocage 8 sont reliés au ballon de signalisation 2 grâce à un système à emboîtement simple constitué de brides 12 portées par chaque demi-sphères dans la zone de jonction réciproque et de contre-brides 14 portées par les moyens de blocage et que l'on doit relier à ces brides 12 afin qu'elles rentrent en rapport avec celles-ci, de manière à ce que ces moyens de blocage se placent sur la surface du ballon de signalisation opposés axialement entre eux. D'après ce qui est illustré dans la fig. 2 en particulier, chacun des moyens de blocage 8 est constitué de deux parties 16a et 16b, en matière plastique et obtenus par injection dans un moule, qui sont disposés en vis-à-vis et résultent spéculaires entre elles. Les portions en vis-à-vis des susdites parties 16a et 16b sont des surfaces planes 17 sur chacune desquelles on a créé une cavité 18 et, opposé de manière barycentrique, on obtient une dent à crampon 20. Entre cette dent 20 et ladite cavité 18, on pratique transversalement, à partir de ladite surface plane 17, un logement 22 dont le plan horizontal 24 est légèrement incliné vers le ballon de signalisation. Ledit logement 22 prévoit en outre une lamelle élastique 26 dotée d'un renflement 28, de l'extrémité de laquelle forjette un repère 30. Cette lamelle constitue la glissière capable d'entrer en rapport avec une cannelure 32 d'un patin 34 coulissant que l'on introduit, avec une butée de fin de course déterminée par le repère 30, dans ledit logement 22 et qui est maintenu dans cette position grâce à la glissière à lamelle 26 et aux languettes latérales 36. Ledit patin 34 porte sur sa partie supérieure une garniture 38 en élastomère suffisamment résistant à la compression, par exemple du type bien connu dans le commerce avec l'appellation Alcrin et produit par Dupont.

Enfin sur chacune des susdites parties constituant les moyens de blocage sur le câble, on a prévu des fourreaux 42, opposés de manière barycentrique et situés au-dessous des surfaces planes 17 entre les deux parois latérales 40a et 40b. Ces fourreaux constituent le logement pour introduire un moyen mécanique comme par exemple une pince, ou pour des vérins permettant l'assemblage des moyens de blocage sur le câble et par conséquent des deux coques hémisphériques constituant le ballon de signalisation sans qu'il y ait intervention directe et manuelle de la personne chargée de l'installation.

D'après ce qui est exposé ci-dessus, il semble évident que dès que les patins coulissants sont introduits à l'intérieur des logements prévus dans les moyens de blocage et que les parties constituant les moyens de blocage sont assemblées grâce à l'introduction par encliquetage des dents dans les respectives cavités, on détermine le montage d'un ballon de signalisation constitué de deux coques hémisphériques. Le blocage positionnel de ce ballon de signalisation sur le câble porteur est obtenu au moyen des patins avec garniture qui sont projetés avec une interférence sur le câble de manière à assurer une pression adéquate sur celui-ci.

En outre la forme essentiellement tronconique du logement abritant les patins et dans lequel passe le câble garantit la récupération des jeux éventuels qui se créent entre les garnitures et le câble suite à la perte éventuelle de leur élasticité. Cette récupération se produit grâce à la possibilité qu'ont les patins avec garniture de se mouvoir à l'intérieur de leur logement en rencontrant une section d'un diamètre progressivement plus petit.

D'après ce qui est dit précédemmment, il semble évident que la découverte formant l'objet de la présente invention réalise un ballon de signalisation pour câbles aériens, dont la forme particulière donnée au logement abritant les moyens de serrage sur le câble permet de récupérer automatiquement les jeux éventuels qui se créent.

## Revendications

1. Ballon de signalisation (2) pour câbles aériens (10) constitué de deux coques hémisphériques (4,6) en matière plastique ou métallique, caractérisé par le fait qu'il comprend des moyens de blocage (8) sur le câble (10) fixés en opposition axiale sur lesdites demi-coques (4,6), chacun composé de deux parties (16a,16b) en vis-à-vis et spéculaires dans chacune desquelles on a prévu:
- une dent (20) et, opposée de manière barycentrique, une cavité (18) respectivement en mesure de s'engager dans la cavité et de recevoir la dent, l'une et l'autre présentes dans la partie spéculairement opposée;
- un logement (22) créé entre la susdite dent (20) et cavité (18) en direction transversale, dans laquelle au moins un plan (24) résulte incliné vers ledit ballon de signalisation (2) et dans lequel on obtient une glissière (26) pour
- un patin (34) introduit de manière à coulisser dans ledit logement (22) et portant une garniture (38) en élastomère qui se ferme en serrant sur le câble (10) au moment de la jonction des parties constituant les moyens de blocage.

2. Ballon de signalisation d'après la revendication 1 caractérisé par le fait que des brides (12) portées par chaque demi-sphères (4,6) dans la zone de jonction réciproque et des contre-brides (14) portées par les moyens de blocage (8) permettent en s'encastrant de fixer lesdits moyens de blocage (8) sur lesdites demi-sphères.

3. Ballon de signalisation d'après la revendication 1 caractérisé par le fait que les portions en vis-à-vis de chacune de ces deux parties (16a,16b) constituant chacun des moyens de blocage sont des surfaces planes (17).

4. Ballon de signalisation d'après la revendication 1 caractérisé par le fait que sur ces surfaces planes (17) on crée ladite cavité (18) et dent complémentaire à crampon (20).

5. Ballon de signalisation d'après la revendication 1 caractérisé par le fait que ledit logement (22) créé transversalement sur ladite surface plane entre la dent et la cavité présente le plan horizontal légèrement incliné (24) vers le ballon même.

6. Ballon d'après la revendication 1 ou 5 caractérisé par le fait que dans ledit logement transversal (22), on a prévu une lamelle élastique (26) dotée d'un renflement (28) et, à l'extrémité, d'un repère (30) qui forjette de cette lamelle.

7. Ballon d'après la revendication 1 caractérisé par le fait que ledit patin (34) est introduit de manière à coulisser dans le logement (22) par l'intermédiaire d'une cannelure (32) qui se met en rapport avec ladite glissière à lamelle (26).

8. Ballon d'après une quelconque revendication précédente caractérisé par le fait que des fourreaux (42) sont prévus, opposés de manière barycentrique, sous ladite surface plane (17) de chacune des deux parties (16a,16b) constituant chacun des moyens de blocage (8), afin de permettre l'assemblage de ces moyens de blocage grâce à des moyens mécaniques qu'on peut y insérer.

9. Ballon d'après une quelconque revendication précédente caractérisé par le fait que lesdits moyens de blocage (8) et demi-sphères (4,6) sont produits par injections dans un moule.

## Patentansprüche

1. Warnkugel für Freileitungskabel, bestehend aus zwei Halbkugeln aus Kunststoff oder Metall, gekennzeichnet durch die Tatsache, daß diese Befestigungsvorrichtungen für die Leitung enthält, die axial einander gegenüber auf den genannten Halbkugeln befestigt sind, und von denen jede aus zwei sich gegenüberliegenden spiegelbildlichen Teilen besteht, und von denen in jeder vorgesehen werden:
- ein Dorn, und schwerpunktmäßig gesehen auf der gegenüberliegenden Seite eine Vertiefung, die jeweils dazu dienen, sich in die Vertiefung einzufügen und den Dorn aufzunehmen, der eine wie die andere gleichfalls auf der spiegelbildlichen Seite enthalten;
- eine Lagerung zwischen besagtem Dorn und Vertiefung in querliegender Richtung, in der wenigstens eine Ebene gegen die genannte Signalkugel geneigt ist, und in die eine Führung eingearbeitet ist, für
- eine Gleitbacke, die in die genannte Führung eingelassen ist, und die eine Dichtung aus elastomerem Material enthält, die die Leitung umschließt, sobald sich die besagten Teile, aus denen die Befestigungsvorrichtung besteht, verbinden.

2. Signalkugel laut Anspruch 1, gekennzeichnet durch die Tatsache, daß die Flansche, die von jeder Halbkugel in die gegenseitige Verbindungszone, und die Gegenflansche, die von den Befestigungsvorrichtungen getragen werden, es ermöglichen, durch Einrasten die genannten Befestigungsvorrichtungen an den genannten Halbkugeln zu befestigen.

3. Signalkugel laut Anspruch 1, gekennzeichnet durch die Tatsache, daß die gegenüberliegenden Hälften jedes der beiden Bestandteile einer jeden der genannten Befestigungsvorrichtungen ebene Flächen bilden.

4. Signalkugel laut Anspruch 1, gekennzeichnet durch die Tatsache, daß in den genannten ebenen Flächen die genannte Vertiefung gebildet wird, und der ergänzende hakenförmige Dorn.

5. Signalkugel laut Anspruch 1, gekennzeichnet durch die Tatsache, daß die genannte Lagerung, die querliegend in der genannten ebenen Fläche zwischen dem genannten Dorn und der genannten Vertiefung gebildet wird eine leichte Neigung gegen die Kugel selbst in der horizontalen Ebene vorweist.

6. Kugel laut Anspruch 1 oder 5, gekennzeichnet durch die Tatsache, daß in der besagten querlaufenden Lagerung eine elastische Membran vorgesehen ist, die mit einer Verdickung versehen ist, und an deren Ende ein Gegenstück, das von der Membran selbst auskragt.

7. Kugel laut Anspruch 1, gekennzeichnet durch die Tatsache, daß die sogenannte Gleitbacke beweglich in die genannte Lagerung eingefügt ist, mittels einer Auskehlung, in die sich die besagte membranförmige Führung einfügt.

8. Kugel gemäß irgendeines der vorherigen Ansprüche, gekennzeichnet durch die Tatsache, daß zwei schwerpunktmäßig gegenüberliegende Hülsen unterhalb der besagten ebenen Fläche jedes der beiden Bestandteile einer jeden der Befestigungsvorrichtungen vorgesehen sind, um den Zusammenbau der Befestigungsvorrichtungen durch mechanische Mittel zu ermöglichen, die in diese einführbar sind.

9. Kugel gemäß irgendeines der vorherigen Ansprüche, gekennzeichnet durch die Tatsache, daß die besagten Halbkugeln und die besagten Befestigungsvorrichtungen durch Injektion in eine Druckform hergestellt werden.

## Claims

1. Marking ball for aerial cables consisting of two hemispherical shells made of plastic or metal, characterized by the fact that they comprise devices for fastening onto the cable which are set in axial opposition on the two aforesaid half-shells, each fastening device being made up of two parts which face one another and are the mirror-image of each other; in each one of these there is:
- a tooth and, in centroidal opposition, a slot, the former being able to engage with the slot, and the latter being able to receive the tooth, the one and the other being present in the part which is specularly opposite;
- a seat produced between the above tooth and slot in the transverse direction, in which the plane of at least one surface is inclined in the direction of the aforesaid warning balloon and in which a guide is made for
- a shoe inserted so that it is free to slide in the aforesaid seat and having a pad made of elastomeric material, which grips tight on the cable at the moment when the aforesaid parts making up the fastening devices join up together.

2. Marking ball according to Claim 1 characterized by the fact that flanges present on each hemisphere and counterflanges present on the fastening devices make it possible, when they slot into one another, to secure the aforesaid fastening devices to the above two hemispheres.

3. Marking ball according to Claim 1 characterized by the fact that the portions facing one another of each of the above-mentioned two parts making up each of the aforesaid fastening devices are plane surfaces.

4. Marking ball according to Claim 1 characterized by the fact that in the above-mentioned plane surfaces there are made the aforesaid slot and the aforesaid complementary harpoon-shaped tooth.

5. Marking ball according to Claim 1 characterized by the fact that the aforesaid seat made transversely in the above plane surface located between the aforesaid tooth and aforesaid slot presents the horizontal plane slightly inclined in the direction of the balloon.

6. Marking ball according to Claim 1 or 5 characterized by the fact that in the above-mentioned transverse seat there is an elastic strip provided with a boss and, at the end, a detent block which protrudes from the strip.

7. Marking ball according to Claim 1 characterized by the fact that the above-mentioned shoe is inserted so that it is free to slide in the aforesaid seat by means of a groove that engages with the elastic-strip guide.

8. Marking ball according to any of the foregoing claims from 1 to 7 characterized by the fact that two bushings are present, set centroidally opposite one another, below the aforesaid plane surface of each of the two parts making up each of the aforesaid fastening devices, in order to allow the fastening devices to be assembled by mechanical means that can be inserted in them.

9. Marking ball according to any of the foregoing claims from 1 to 8 characterized by the fact that the aforesaid hemispheres and the aforesaid fastening devices are produced by injection moulding.
